# EUROPÄISCHE PATENTSCHRIFT

(11) **EP 2 908 987 B1**
(45) Veröffentlichungstag und Bekanntmachung des Hinweises auf die Patenterteilung: **13.12.2017**
(21) Anmeldenummer: 13805739.3
(22) Anmeldetag: 16.10.2013
(51) Int. Cl.: B25J 11/00, F03D 1/00, F03D 17/00, F03D 80/50

(54) **ROBOTER ZUR INSPEKTION VON ROTORBLÄTTERN VON WINDENERGIEANLAGEN**
ROBOT FOR INSPECTING ROTOR BLADES OF WIND ENERGY INSTALLATIONS
ROBOT DESTINÉ À L'INSPECTION DE PALES DE ROTOR D'ÉOLIENNES

(30) Priorität: 16.10.2012 DE 202012009844 U; 19.04.2013 DE 102013006867
(43) Veröffentlichungstag der Anmeldung: 26.08.2015
(73) Patentinhaber: KRAMPE, Nina Katharina, 48151 Münster (DE); KRAMPE, Timothy, 48151 Münster (DE)
(72) Erfinder: KRAMPE, Susanne ( deceased), 48151 Münster (DE)
(74) Vertreter: Winter, Brandl, Fürniss, Hübner, Röss, Kaiser, Polte - Partnerschaft mbB
(86) Internationale Anmeldenummer: PCT/DE2013/000604
(87) Internationale Veröffentlichungsnummer: WO 2014/059964

(56) Entgegenhaltungen:
- DE-B3-102010 046 493
- US-A1- 2006 175 465
- US-A1- 2009 173 573
- US-A1- 2010 103 260
- US-A1- 2011 090 110

## Beschreibung

Die Erfindung betrifft den Einsatz von Robotern mit moderner Prüftechnologie zur vollständigen Zustandserfassung der Rotorblätter von Windenergieanlagen (WEA). Generell ist der Service von Windenergieanlagenblättern in großer Höhe eine Herausforderung für Personal und Industrie. Bei optischer Inspektion der Rotoren vor Ort sind mindestens 2 Fachkräfte erforderlich, wobei pro Tag die Blätter von nur einer bis max. zwei Windkraftanlagen am Tag untersucht werden können. Aus der US-A1-2006 0175465 ist eine Vorrichtung zur Inspektion von Rotorblättern von Windenergieanlagen bekannt, die eine Rahmenkonstruktion mit einer ein Rotorblatt im Einsatz umgebenden Öffnung, mehrere an der Rahmenkonstruktion angeordnete Auftriebskörper für eine vertikale Bewegung der Vorrichtung, sowie eine an der Rahmenkonstruktion angebrachtes Rotorblatt-Zustandserfassungssystem aufweist. Ferner sind aus der US-A1-2010 0103260 und der DE-B3-10 2010 046 493 Inspektionsroboter für Rotorblätter von Windenergieanlagen bekannt, die jeweils eine mit mehreren Propellern ausgestattete Rahmenkonstruktion aufweisen.

Von diesem Stand der Technik ausgehend ergibt sich die Aufgabe, einen präzise und beschädigungsfrei positionierbaren Roboter zur Inspektion von Rotorblättern von Windenergieanlagen bereitzustellen. Der erfindungsgemäße Roboter zur Inspektion von Rotorblättern von Windenergieanlagen, der auch als ServiceCopter bezeichnet werden kann, weist eine Rahmenkonstruktion mit einer ein Rotorblatt im Einsatz umgebenden inneren Öffnung und mehreren Propellern für eine vertikale Flugbewegung der Roboters, und ein an der Rahmenkonstruktion angebrachtes Rotorblatt-Zustandserfassungssystem auf.

Vorzugsweise kann ein Kabel als Stromkabel und optional auch als Datenkabel zur Verbindung des Roboters im Einsatz mit einer am Boden, einem Fahrzeug oder Gebäude befindlichen Station vorhanden sein, die zur Stromspeisung des Roboters im Flug- oder Schwebebetrieb dient, die notwendige Betriebsspannung und -leistung für den Roboterflugbetrieb bereitstellt und z.B. in Form einer Steuer- und Auswertestation ausgebildet sein kann, die zusätzlich noch die Steuersignale für die Robotersteuerung, z. für die Flughöhe, Geschwindigkeit, Flugrichtung, Trimm usw. generiert und über das Kabel zum Roboter überträgt. Diese vorzugsweise mobile Station, Stromversorgungsstation oder Steuer- und Auswertestation kann z.B. direkt am Erdboden oder auch an oder in einem Gebäude oder auch mobil an oder auf einem Fahrzeug angeordnet sein und die für die Flugsteuerung benötigten Steuersignale senden oder übertragen kann, und alternativ oder zusätzlich die bei der Untersuchung der Rotorblätter erfassten, z.B. elektromagnetischen, optischen oder akustischen Messsignale empfangen und gegebenenfalls auswerten kann.

Diese Messsignale können auch direkt im Roboter ausgewertet werden oder alternativ oder zusätzlich über das Stromkabel oder auch drahtlos mittels eines im Roboter befindlichen Senders oder Transceivers (Sender/Empfänger) zu einem Empfänger oder Transceiver der Station, z.B. der Bodenstation übertragen werden. Auch die zur Flugsteuerung vom Roboter benötigten Steuersignale, z.B. für die Höhen-, Lage- und/oder Geschwindigkeitssteuerung, können über das Stromkabel oder auch drahtlos mittels eines in der Station befindlichen Senders oder des Transceivers (Sender/Empfänger) zu einem Empfänger oder dem Transceiver des Roboters übertragen werden.

Der Roboter kann eine Andock- und/oder Führungseinrichtung zum Andocken und / oder Führen des Roboters an dem Rotorblatt aufweisen, sodass eine präzise und beschädigungsfreie Positionierung und Führung erreichbar ist.

Die Andock- und/oder Führungseinrichtung kann einen oder mehrere verstellbare Arme aufweisen, so dass eine flexible Anlage an dem Rotorblatt erreichbar ist.

Die Arme der Andock- und/oder Führungseinrichtung können hierbei z.B. federvorgespannt und / oder motorisch verstellbar sein.

Die Arme der Andock- und/oder Führungseinrichtung sind vorzugsweise mit einer Beschichtung wie etwa Puffern oder Gummipuffern versehen.

Die Andock- und/oder Führungseinrichtung kann z.B. an den Schmalseiten der Rahmenkonstruktion angebracht sein.

Der Roboter kann einen Wechselrichter oder Umrichter enthalten, der an der Rahmenkonstruktion angebracht ist und zur Umwandlung von über das Kabel zugeführter Versorgungsspannung dient. Damit wird eine Gewichtsverringerung erreicht.

Der Roboter kann ferner mit zwei oder mehr, vorzugsweise vier Gruppen aus jeweils einem oder mehreren, vorzugsweise vier Propellern versehen sein, die an den beiden Längsseiten der Rahmenkonstruktion angebracht sein können.

Das Zustandserfassungssystem kann z.B. mindestens einen Sensor mindestens eine Kamera, mindestens eine für Thermographie ausgelegte Kamera oder Inspektionseinrichtung und / oder eine Ultraschalluntersuchungseinrichtung aufweisen.

Ein erfindungsgemäßes System kann den Roboter, das Kabel und die Steuer- und Auswertestation umfassen.

Die Erfindung wird nachstehend unter Bezugnahme auf die Zeichnungen näher beschrieben.

In den Figuren 1 bis 6 sind verschiedene Ansichten eines ersten Ausführungsbeispiels der Erfindung gezeigt.

Die Figuren 7 bis 12 zeigen verschiedene Ansichten eines zweiten Ausführungsbeispiels der Erfindung, das eine andere Propelleranordnung aufweist.

In den Figuren 13, 14 sind verschiedene Ansichten einer Ausführungsform des Führungs- und Andocksystems 5 gezeigt.

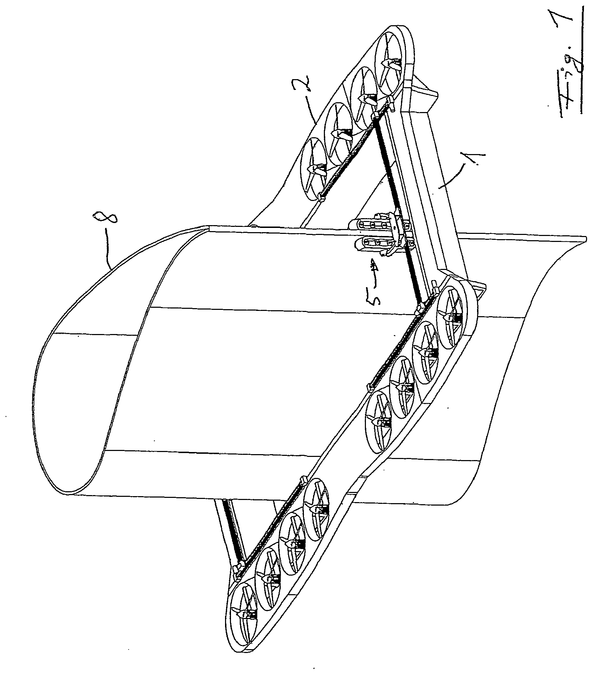

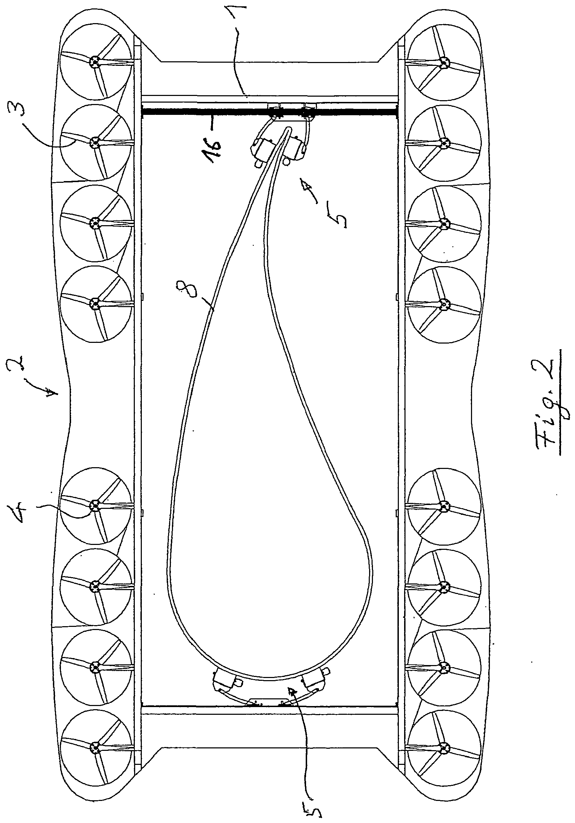

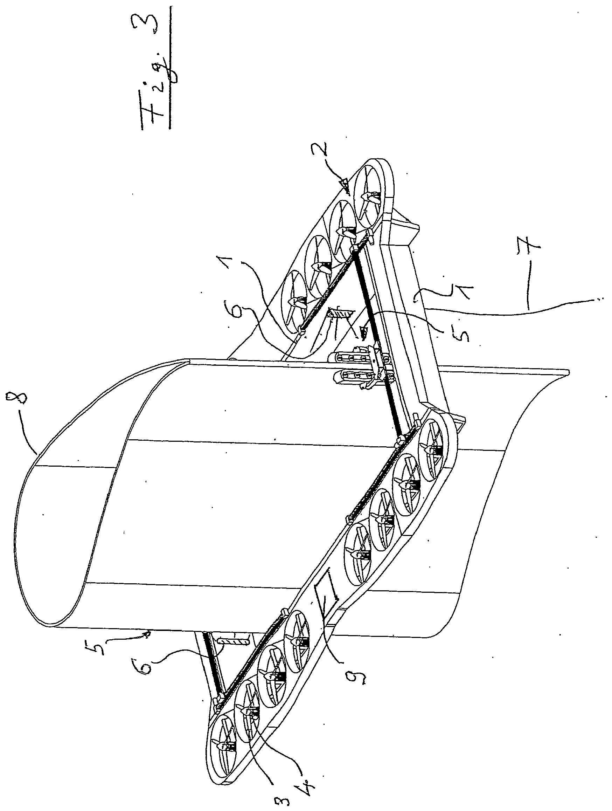

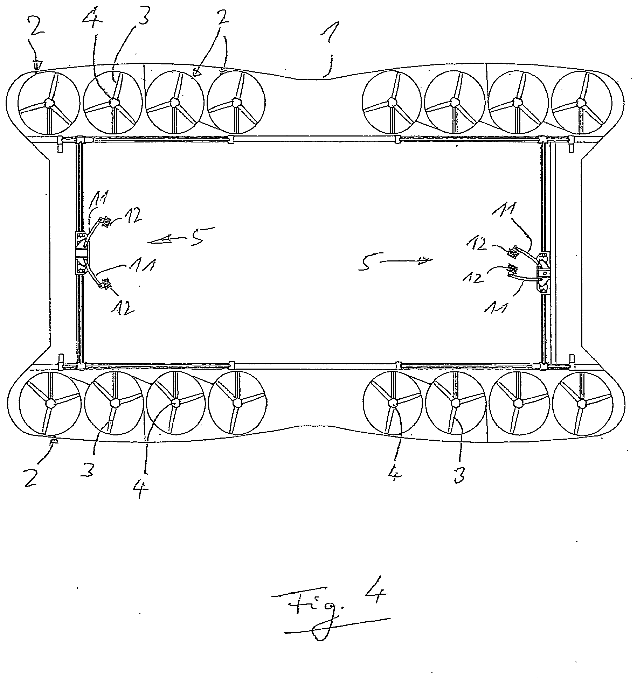

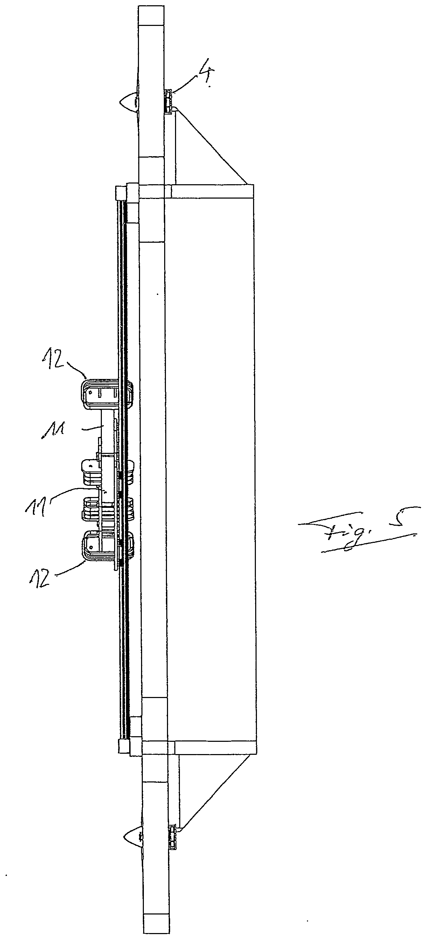

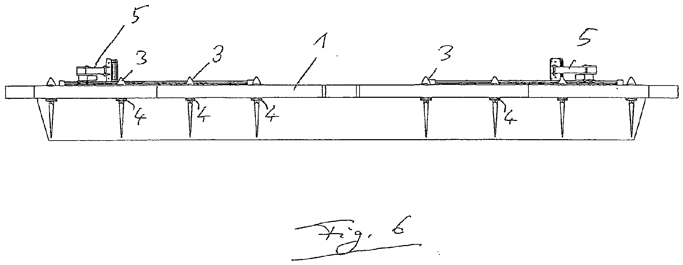

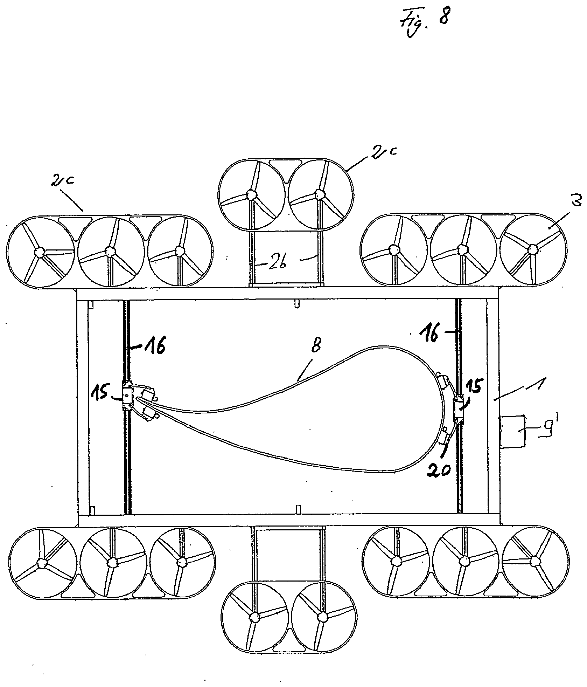

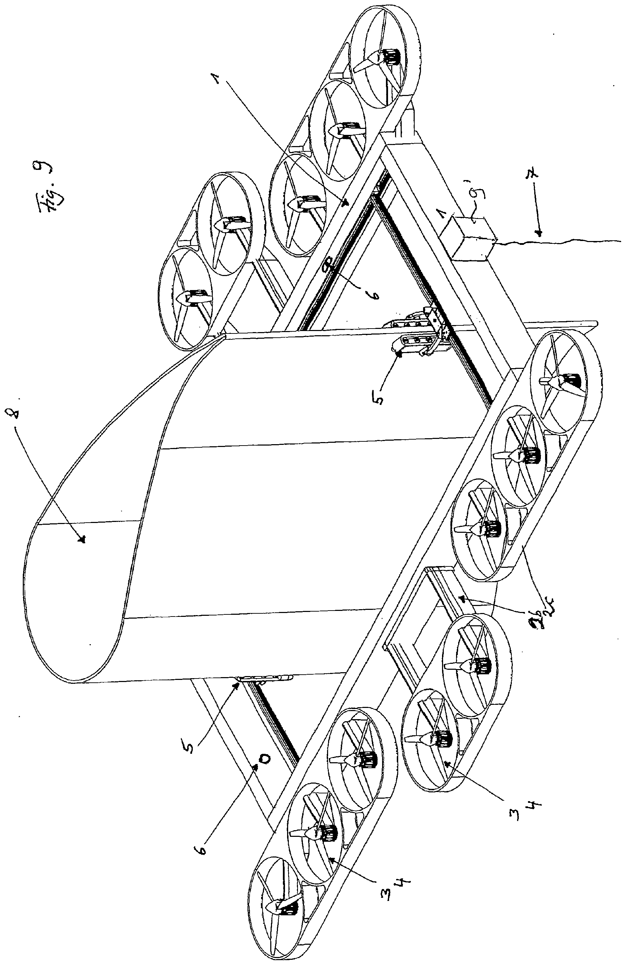

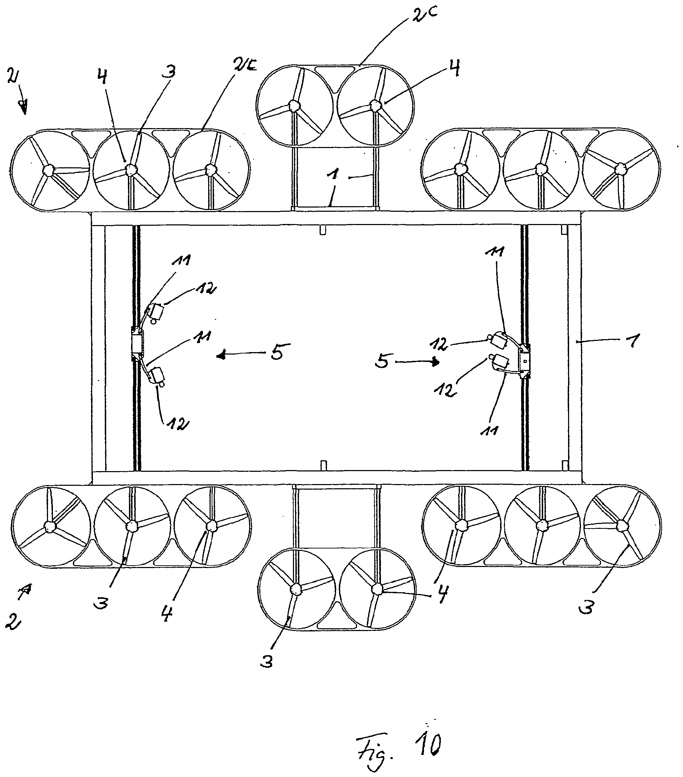

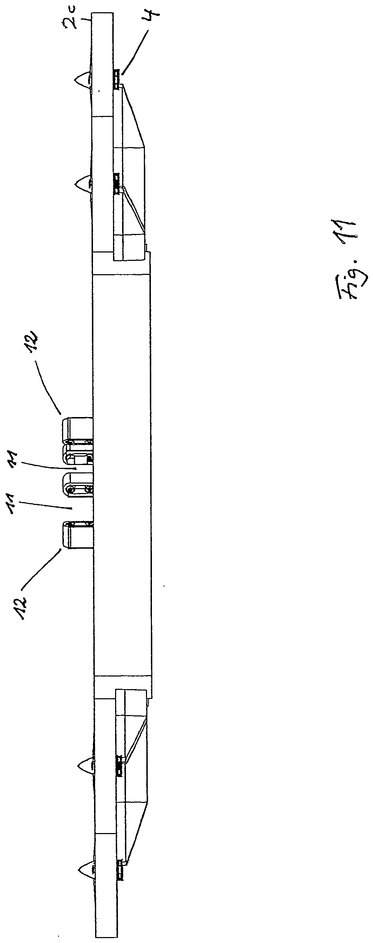

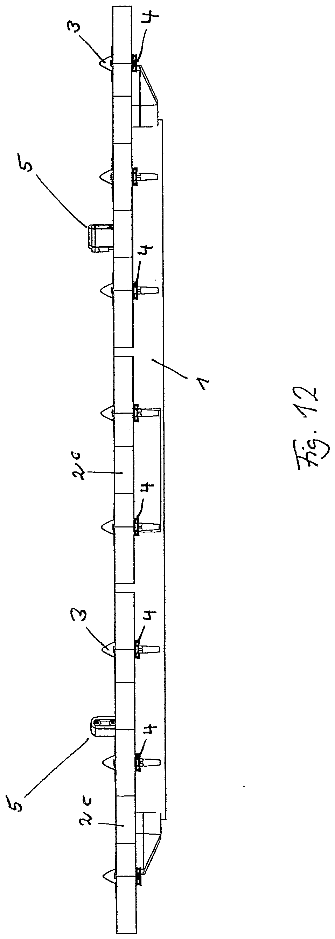

Soweit in den Figuren 1 bis 14 Elemente mit gleichen Bezugszeichen bezeichnet sind, gelten die nachfolgenden Beschreibungen dieser Bezugszeichen für beide Ausführungsbeispiele, sofern nachstehend nichts anderes angegeben ist. Des gleichen gelten allgemeine, nachfolgende Beschreibungen für alle gezeigten oder beschriebenen Ausführungsbeispiele, sofern nachstehend nichts anderes angegeben ist.

Der erfindungsgemäße Roboter (ServiceCopter) kann z.B. gemäß Fig. 1 am oberen Bereich eines Rotorblatts 8 einer Windenergieanlage positioniert und entlang des Rotorblatts in Vertikalrichtung und gegebenenfalls zusätzlich oder alternativ in horizontaler oder schräger Richtung bewegt werden. Der Roboter weist ein Träger-Modul 1 mit aerodynamischer Antriebstechnik, eine Antriebseinheit 2 mit Propellern 3 und Steuerung, ein Führungs- und Andocksystem 5, ein Rotorblatt-Zustandserfassungssystem 6, und ein Kabel 7 auf, das einerseits mit dem Roboter, vorzugsweise einer an einem Rahmen 1 des Roboters angebrachten Einrichtung 9, z.B. in Form eines Moduls mit eigenem Gehäuse, fest oder lösbar, z.B. über eine Steckverbindung, verbunden ist.

Die Einrichtung 9 kann z.B. einen Umrichter, z.B. einen Gleichrichter oder Wechselrichter aufweisen, der die von einer Bodenstation 10 zugeführte Wechsel- oder Gleichspannungsenergie, also die Betriebsenergie, in die vom Roboter benötigte Gleich- oder Wechselspannung umsetzt. Alternativ oder zusätzlich kann die Einrichtung 9 auch Steuersignale für den Roboterbetrieb über das Kabel 7 erhalten und/oder bei der Rotorblattuntersuchung erfasste Messsignale in das Kabel 7 zu der Bodenstation 10 einspeisen.

Das Kabel 7 kann in Form eines reinen Stromkabels zur Zufuhr der Betriebsenergie von der fest installierten oder vorzugsweise mobilen, z.B. auf einem Fahrzeug wie einem LKW angeordneten Station 10 als Bodenstation, oder auch in Form eines Strom- und/oder Datenkabels für die Signalübertragung zwischen der Station und dem Roboter ausgebildet sein kann. Alternativ können ein Stromkabel und ein Datenkabel gemeinsam von der Bodenstation zum Roboter geführt sein.

Das Kabel 7 ist mit der Station 10, vorzugsweise einer dort angebrachten Einrichtung, z.B. in Form eines Moduls mit eigenem Gehäuse fest oder lösbar, z.B. über eine Steckverbindung, verbunden. Die Station 10 speist die vom Roboter benötigte Gleich- oder Wechselspannung, also die Betriebsenergie, in das Kabel 7 ein und kann ebenfalls z.B. einen Umrichter, einen Gleichrichter oder Wechselrichter aufweisen. Alternativ oder zusätzlich kann die Station 10 auch Steuersignale für den Roboterbetrieb erzeugen oder weiterleiten und über das Kabel 7, oder drahtlos über eine Funkverbindung, zum Roboter übertragen, und/oder bei der Rotorblattuntersuchung erfasste Messsignale über das Kabel 7 oder ein zweites Kabel, oder drahtlos über eine Funkverbindung, erhalten und/oder auswerten und/oder speichern.

Bei einem, mehreren oder allen Ausführungsbeispielen ist eine visuelle Oberflächenprüfung des Rotorblatts 8 durch eine oder mehrere am Roboter angebrachte Videoaufnahmegeräte bzw. per Kamera möglich.

Alternativ oder zusätzlich kann eine Prüfung der Oberfläche des Rotorblatts 8 durch Infrarot-Thermographie erfolgen.

Alternativ oder zusätzlich kann ein Gerät für Ultraschall-Prüftechnik wie z.B. bei Offshore-Technik zum Einsatz kommen.

Der erfindungsgemäße Roboter ist z.B. für unterschiedliche WEA - Typen einsetzbar

Die Erfindung erlaubt die Vermeidung von Seilaufhängungen an der Gondel. Auch ist kein Betreten der Gondel notwendig.

Bei einem, mehreren oder allen Ausführungsbeispielen ist ein vollautomatisierter Ablauf gewährleistet

Der Personaleinsatz kann auf maximal eine Fachkraft begrenzt werden, die zudem am Boden bleiben kann und deshalb nicht speziell gesichert werden muss.

Der zeitliche Aufwand für die Untersuchung kann auf max. 2,5 Stunden je WEA begrenzt werden. Damit sind z.B. 4 Untersuchungen am Tag möglich, während bei herkömmlichen Inspektionen maximal zwei Untersuchungen am Tag möglich sind.

Der erfindungsgemäße Roboter kann in Vertikalrichtung entlang des gerade untersuchten, vorzugsweise in Vertikalrichtung stehenden, arretierten Rotorblatts kontinuierlich oder stufenweise durch entsprechende Ansteuerungen der Rotoren bewegt werden und sukzessive das gesamte Rotorblatt von unten nach oben, oder auch in umgekehrter Richtung, untersuchen.

Als Basis ist ein Träger-Modul mit einem aerodynamischen Antrieb vorgesehen, das für unterschiedliche WEA einsetzbar ist.

Der Roboter weist das Träger-Modul 1 in Form einer Rahmenkonstruktion auf, das das Rotorblatt der Windenergieanlage vollständig umgibt, eigenständig und unabhängig von Seilaufhängungen an der WEA-Gondel oder Kransystemen an der WEA vom Boden bis zum WEA-Rotorblatt mittels des aerodynamischen Antriebs 2 freischwebend auf- und abfährt und mit einer bestimmten Geschwindigkeit das WEA-Rotorblatt von der Rotorblattspitze bis zur Rotorblattwurzel und / oder umgekehrt freischwebend befährt. Die Rahmenkonstruktion weist einen vorzugsweise umlaufenden, geschlossenen Rahmen auf, der z.B. aus vier oder mehreren miteinander verbundenen Einzelrahmen gebildet sein kann und in der Mitte in Vertikalrichtung hohl ist, um das Rotorblatt mit horizontalem Abstand aufnehmen zu können. Alternativ kann der Rahmen die Form eines U, einer Raute, eines Parallelogramms oder eines Vielecks aufweisen oder auch offen sein und zum Beispiel nur an drei Seiten Trägerteile aufweisen, so dass er z.B. die Form eines U aufweist.

In dem Träger-Modul 1 des Roboters ist die erforderliche Sensorik 6, wie Kameras, z.B. Photokameras, Videokameras, Thermografie-Wärmebildkameras und Ultraschallsensoren für die vorzugsweise berührungsfreie Abtastung Zustandserfassung der WEA-Rotorblätter in erforderlichen und unterschiedlichen Positionen unter Ausrichtung auf die Position des zu untersuchenden Rotorblatt eingebaut, wie dies in den Zeichnungen als Beispiel dargestellt ist. Die Sensorik 6 dient als Rotorblatt-Zustandserfassungssystem.

Der Roboter weist den aerodynamischen Antrieb 2 für eine Vertikalflugbewegung auf. Die Positionierung des Roboters am WEA-Rotorblatt erfolgt mittels des aerodynamischen Antriebs 2, der aus mehreren im oder am Rahmen 1 in unterschiedlichen Abständen angeordneten Propellern 3 mit Elektromotoren 4 besteht und damit selbstständig flugfähig ist.

Der aerodynamische Antrieb 2, der z. B. zwei, drei, vier oder mehrere Gruppen mit jeweils einem oder mehreren, z.B. vier Propeller 3 mit Motorenantrieb aufweist, kann an zwei, drei oder allen Seiten in dem Träger-Modul 1 in gleichen und / oder ungleichen Abständen integriert an- oder auch eingebaut werden.

Durch eine am oder im Trägermodul 1 vorgesehene elektronische Steuerung 9 des aerodynamischen Antriebs 2 wird ein gleichmäßiger Abstand des Roboters zur WEA-Rotorblattoberfläche gewährleistet. Somit wird das Berühren der WEA-Blattoberfläche durch den Rahmen 1 des Roboters vermieden. Der aerodynamische Antrieb 2 wird kontinuierlich, während der kompletten Inspektionsphase des Rotorblatts betrieben, um das Gewicht des Roboters zu tragen. Die Steuerung 9 weist vorzugsweise einen Wechselrichter oder Umrichter auf, der die über ein bis zum Boden reichendes Kabel 7 vom Boden her zugeführte Versorgungsspannung in die für die Speisung der Elektromotoren 4 erforderliche Gleich- oder Wechselspannung mit entsprechenden Spannungen umwandelt. Damit muss der Roboter keine eigenen Batterien oder Akkus enthalten, was das Gesamtgewicht verringert.

Die maximale Flughöhe des Roboters ist durch die Kabellänge des Kabels7 und / oder steueungstechnische Maßnahmen auf z.B. 100 m oder die maximale Rotorblatthöhe begrenzt, um keine Flugvorschriften zu gefährden.

An zwei oder mehreren, z.B. vier Seiten des Träger-Moduls 1 ist ein in mehreren Achsen verstellbares Führungs- und Andocksystem 5 installiert, um auch bei höheren Windgeschwindigkeiten die Positionierung und das Führen des Roboters am WEA-Blatt 8 zu gewährleisten. Das Führungs-Andocksystem 5 dient zur Feinjustierung und zur gleichmäßigen Führung des Roboters am Rotorblatt, und nicht zur vollständigen Aufnahme des Gewichts des Roboters. Somit wird gewährleistet, dass keine unnötigen Belastungen auf das Rotorblatt 8 übertragen werden und somit die Oberfläche des Rotorblatts frei von Beschädigungen gehalten wird.

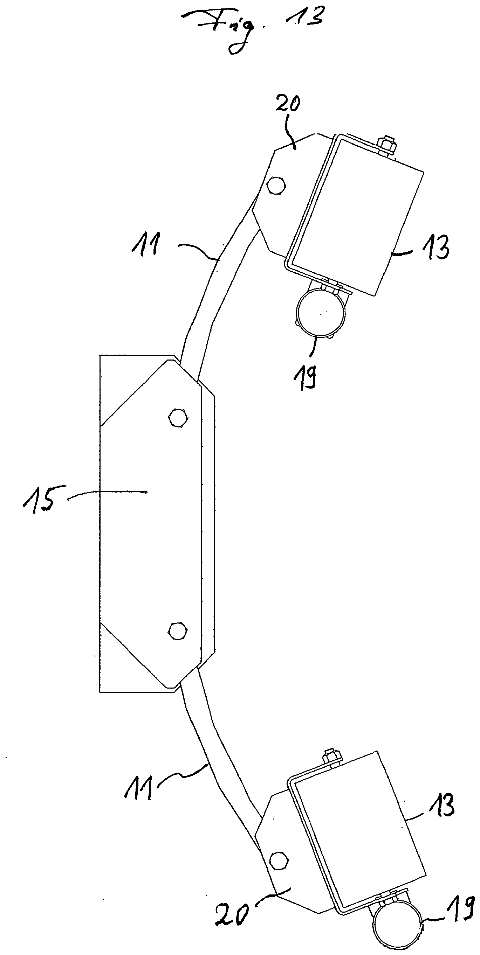

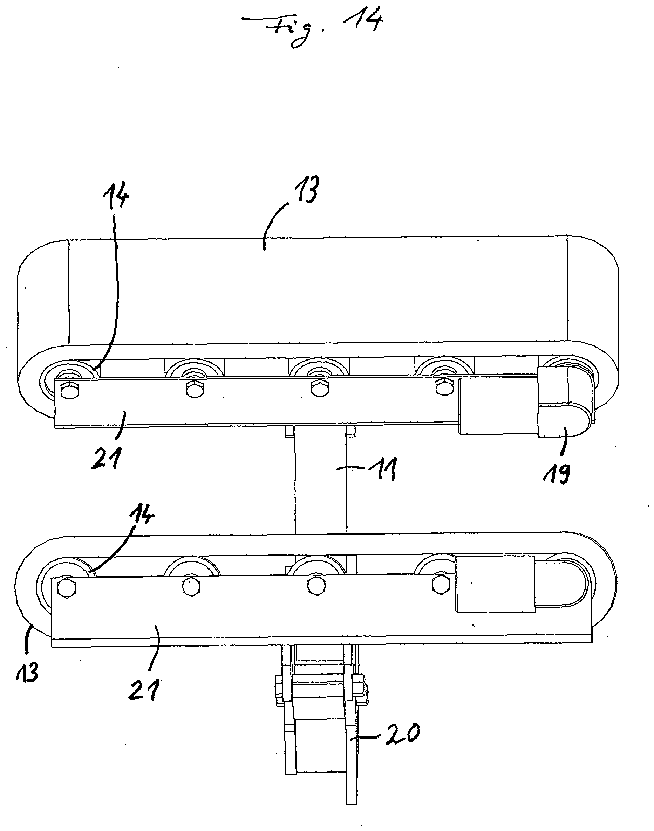

Das oder jedes der Führungs- und Andocksysteme 5 weist z.B. an den gegenüberliegenden Schmalseiten des Rahmens 1 federvorgespannte Arme 11 auf, die sich direkt an das Rotorblatt 8 von dessen beiden Seitenflächen oder der breiteren Stirnfläche federnd anlegen können und damit eine gute gleichmäßige Führung entlang des Rotorblatts im wesentlichen in vertikaler Richtung gewährleisten. Beide Arme 11, oder alternativ auch nur einer der Arme, sind jeweils mit einer oder mehreren elektromotorisch angetriebenen Führungen 12 mit einem oder vorzugsweise mehreren Zahnriemenrädern 14, mit einem oder mehreren, optional als Elektromotor ausgebildeten Motoren 19 (siehe auch Fig. 13, 14), und mit einem oder mehreren umlaufenden Zahnriemen 13 mit beschädigungsverhindernder Beschichtung wie etwa einer Gummi- oder Kunststoffbeschichtung oder einer Gummi-Kunststoffbeschichtung versehen.

Bei einem weiteren Ausführungsbeispiel weist jede Führung 12, oder mindestens eine oder einige der Führungen 12 anstelle von Zahnriemenrädern 14 und Zahnriemen 13 mindestens eine drehbare, elektromotorisch angetriebene Laufrolle (z.B. Reibrolle) mit beschädigungsverhindernder Beschichtung je Arm 11 auf, die durch den Arm 11 direkt an das Rotorblatt 8 federnd angedrückt ist und durch den Motor (Elektromotor) 19 motorisch antreibbar ist, um am Rotorblatt entlang nach oben oder unten zu wandern und hierbei den Rahmen 1 mitzubewegen.

Durch die direkte Anlage (Reibschluß) an dem Rotorblatt und den vertikalen Antrieb bewirken die Führungen 12 ein Klettern des Roboters am Rotorblatt in vertikaler Richtung und unterstützen damit die durch die Propeller hervorgerufene Vertikalbewegung des Roboters bei einer Aufwärtsbewegung und / oder einer Abwärtsbewegung.

Bei einigen Ausführungsbeispielen tragen die Führungen 2 bis 50%, vorzugsweise 5% bis 20% des Gewichts des Roboters, wohingegen die Propeller den verbleibenden Gewichtsanteil des Roboters tragen. Hierzu werden die Propellermotoren und die Elektromotoren 19 der Führungen durch die Steuereinrichtung 9 gemeinsam so gesteuert, dass diese Gewichtskraftaufteilung erreicht wird und die vertikal gerichteten Bewegungsanteile synergistisch zusammenwirken, sich also ergänzen und nicht gegenseitig stören.

Die Untersuchung des Rotorblatts beginnt bei einer Ausgestaltung von oben, so dass der Roboter beim Einsatz zuerst ganz nach oben zur Blattwurzel schwebend, vorzugsweise, aber nicht zwingend, ohne Berührung mit dem Rotorblatt 8 hochgefahren wird und danach bei der nachfolgenden Abwärtsbewegung und an das Rotorblatt 8 angelegten Klemmbacken 12 die Blattuntersuchung, vorzugsweise bei konstanter, oder etwa konstanter Sinkgeschwindigkeit durchgeführt wird. Hierzu können die Klemmbacken bei einem oder mehreren Ausführungsbeispielen durch die Steuereinrichtung 9 bei der Aufwärtsbewegung in eine stark oder maximal zurückgezogene und geöffnete Position gebracht werden, z. B. durch elektromotorisches Verfahren von Laufschienen 16 in ihre äußere, blattentfernte Randstellung und durch Öffnen der Klemmbacken 12, und es können die Klemmbacken 12 vor oder bei Beginn der Abwärtsbewegung elektromotorisch oder durch Freigabe der federvorgespannten Klemmbacken 12 in die geschlossene, an das Rotorblatt 8 angelegte Position verfahren werden. Bei einem oder mehreren anderen Ausführungsbeispielen bleiben die Klemmbacken sowohl bei der Aufwärtsals auch bei der Abwärtsbewegung des Roboters stets in Anlage mit dem Rotorblatt 8, solange sie sich auf dessen Höhe befinden. Dies vereinfacht die Steuerung, verringert das Gewicht und verkleinert die Störanfälligkeit.

Die Untersuchung des Rotorblatts kann bei anderen Ausführungsbeispielen aber z.B. auch von unten nach oben durchgeführt werden.

Bei anderen Ausführungsbeispielen können die Arme 11 ohne eigenen Antrieb in Form von elastisch am Blatt anliegenden Elementen wie etwa Gummipuffern ausgebildet sein.

Die Arme 11 können bei einem, mehreren oder allen Ausführungsbeispielen zur Gewährleistung einer guten Anlage am Rotorblatt 8 anstelle von, oder zusätzlich zu einer federnden Vorspannung an das Rotorblatt auch motorisch verstellbar, z.B. in Richtung zu dem Rotorblatt 8 an- und ausschwenkbar, sein. Die Arme 11 sind z.B. parallel zur Rahmenoberfläche oder Rahmenebene verschwenkbar.

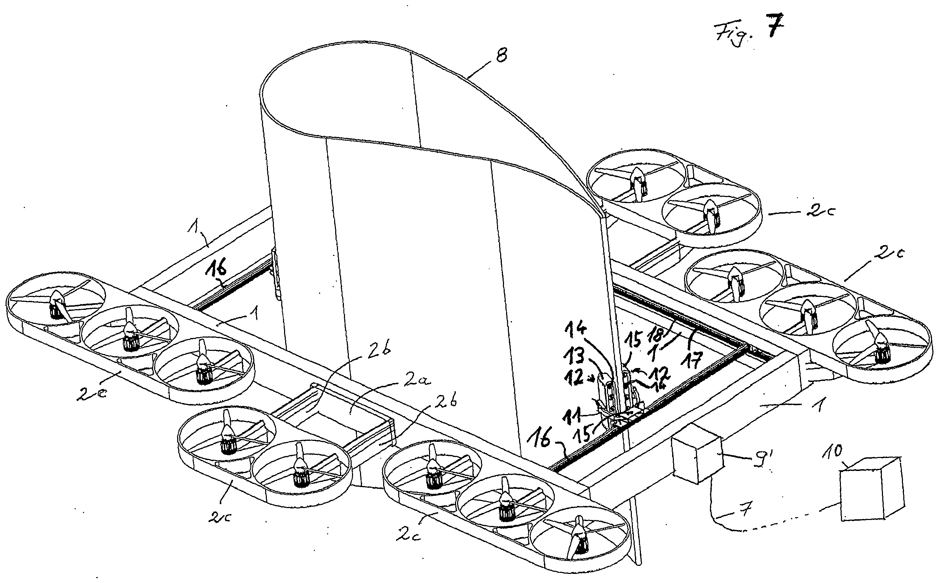

Wie beispielsweise in Fig. 7 und auch den anderen Figuren gezeigt ist, ist in den längeren Seitenrahmenteilen jeweils eine Führungsrille 17 zur Führung von Laufschienen 16 ausgebildet. Die Laufschienen 16 sind, wie gezeigt, parallel zu den kürzeren Seitenteilen des Rahmens 1 angeordnet und parallel hierzu entlang der Führungsrillen 17 bewegbar. Die Laufschienen 16 bilden jeweils einen Träger, der an seinen beiden Seiten in den sich gegenüberliegenden Führungsrillen 17 beweglich gehalten ist und damit rechtwinklig zu den parallel zueinander verlaufenden Führungsrillen 17 beweglich ist.

An jeder Laufschiene 16 ist mindestens ein Klemmbackensystem, d.h. eines der Andocksysteme 5, angeordnet, das die Arme 11 aufweist und entlang der Laufschiene 16 parallel zu der kürzeren Rahmenseite passiv, oder bei motorischem Antrieb auch aktiv, verfahrbar ist, derart, dass es sich von beiden Seiten an das Rotorblatt 8 anlegen kann und seitliche Bewegungen entlang der Laufschiene 16 (in als X-Richtung definierter Laufschienenerstreckungsrichtung) bei der vertikalen Aufwärts- oder Abwärtsbewegung des Roboters ausführen kann. Durch die bewegliche Anordnung der Laufschienen 16 in den Führungsrillen 17 können die jeweiligen Klemmbackensysteme zudem bei der vertikalen Aufwärts- oder Abwärtsbewegung des Roboters Bewegungen quer zur X-Richtung unter Annäherung an die, oder Entfernung von der Rotorblatt-Längsachse, also in Y-Richtung ausführen, so dass eine X- Y- Führung der Klemmbackensysteme 5 in der Horizontalen erreicht ist.

In mindestens einer der parallel zueinander verlaufenden Führungsrillen 17 und / oder in mindestens einer der Laufschienen 16 kann auch ein Stromkabel oder eine Stromschiene 18 für die Stromspeisung der Elektromotoren der Klemmbackensysteme, d.h. der Andocksysteme 5 angeordnet sein, das bzw. die mit der Steuereinrichtung 9', des Elektromotoren 19 und ggfls weiteren Komponenten des Roboters verbunden ist. Zusätzlich kann hier, oder auch an anderer Stelle, ein Datenkabel für die Übertragung von Steuersignalen oder Messwerten von oder zu der Steuereinrichtung 9' verlaufen, das mit der Steuereinrichtung 9' und den Sensoren und ggfls weiteren Komponenten des Roboters verbunden ist.

Die Stromversorgung des aerodynamischen Antriebs 2, bestehend aus mehreren Propellern 3 mit Motorenantrieb 4, erfolgt über das Kabel 7, das zugleich auch als Datenkabel dienen kann. Das Kabel 7 überträgt Steuersignale von einer am Boden befindlichen Steuer- und Auswertestation zum Roboter, und übertragt ferner die vom System 5 gebildeten, den Rotorblattzustand angebenden Messignale zu der am Boden befindlichen Steuer- und Auswertestation.. Hierdurch wird das Mittführen von schweren Akkus vermieden. Die nötige Spannung bzw. der notwendige Strom wird über den in dem Träger-Modul, der Steuerung 9 oder der Einrichtung 9' (Fig. 7 befindlichen Wechselrichter erzeugt.

Bei dem Ausführungsbeispiel gemäß den Figuren 1 bis 6 sind die z.B. acht Propeller 3 einer jeweiligen Längsseite in einer Linie angeordnet und zu zwei Gruppen mit je vier Propellern zusammengefasst, die in gegenseitigem Abstand stehen.

Bei dem Ausführungsbeispiel gemäß den Figuren 7 bis 12 sind die z.B. acht Propeller 3 einer jeweiligen Längsseite zu drei Gruppen mit je zwei bzw. drei Propeller zusammengefasst, wobei die Propeller von zwei Gruppen, z.B. der beiden äußeren Gruppen, in einer Linie angeordnet sind, und die z.B. zwei Propeller umfassende, z.B. mittlere Gruppe, auf einem Halter oder Gestell 2a in seitlich abstehender Weise so angebracht sind, dass sie größeren Abstand zur vertikalen Mittelebene des Roboters als die beiden anderen Gruppen aufweist. Dies kann die Flugstabilität noch weiter verbessern.

Die Halter 2a können U-förmige Gestalt mit seitlich abstehenden Auslegern 2b aufweisen, an deren Enden die Propellermotoren angebracht sind. Die jeweiligen Gruppen können eigene seitliche Rahmen 2c haben, die die Gruppe und die zugehörigen Propeller umschließen und hohe Stabilität mit sich bringen.

Allgemein gesagt kann bei diesem Ausführungsbeispiel an jeder der beiden Längsseiten der Rahmenkonstruktion jeweils mindestens ein Propeller oder eine Gruppe von Propellern, vorzugsweise die mittlere Gruppe, in seitlich abstehender Weise angeordnet sein, derart, dass der Propeller oder diese Propeller-Gruppe größeren Abstand zu einer durch den Roboter parallel zu den Längsseiten des Rahmens verlaufenden Vertikalebene oder Mittelebene aufweist als die seitlich zu dieser Gruppe benachbarte/n Gruppe/n, die an der jeweiligen Längsseite der Rahmenkonstruktion angebracht ist bzw. sind.

Ausführungsbeispiele der Erfindung beinhalten den Einsatz von Robotern mit moderner Prüftechnologie zur vollständigen Zustandserfassung der Rotorblätter von Windenergieanlagen. Der Roboter dient zur Inspektion der Rotorblätter von Windenergieanlagen. Es ist auch ein Offshore Einsatz möglich.

Eine visuelle Oberflächenprüfung erfolgt durch Video bzw. per Kamera.
Die Prüfung der Oberfläche kann z.B. durch Infrarot-Thermographie und / oder auch durch Ultraschall-Prüftechnik erfolgen, z.B. für Offshore-Einsatz.

Es können industriell verfügbare, wartungsarme Brushless DC Elektromotoren (BLDC) mit elektronisch drehzahlgesteuerten Antrieben und Steuerungstechnologie eingesetzt werden. Mit dem Roboter "Hovering Blade Scanner" wird der Rotorblattservice maximal automatisiert:
Basis bei einem, mehreren oder allen Ausführungsbeispielen ist ein Träger-Modul mit einem aerodynamischem Antrieb, einsetzbar für unterschiedliche WEA-Typen. Das Betreten der Gondel / Blätter im Freien ist nicht notwendig. Ein vollautomatisierter Ablauf und Positionierung am Blatt ist gewährleistet. Der Personaleinsatz ist auf ein/zwei Fachkräfte begrenzt. Der zeitliche Aufwand einer Untersuchung ist z.B. auf max. 2 Stunden je WEA begrenzt.

Das Funktionsprinzip des HBS beruht darauf, dass das Gewicht des Systems während des gesamten Einsatzes vom aerodynamischem Antrieb für das Auffahren vom Boden zum Rotorblatt, dem Untersuchungsablauf am Rotorblatt sowie dem Abfahren vom Rotorblatt zum Boden übernommen wird. Während des Untersuchungsvorgangs am Rotorblatt gewährleistet das Führungs-Andocksystem die richtige Positionierung des Träger-Moduls mit der integrierten Zustandserfassungstechnik. Gleichzeitig übernimmt das Führungs-Andocksystem das Folgen der Konturen des Rotorblattes. Die automatisierte Steuerung beider Systeme (aerodynamische Antriebstechnik und Führungs-& Andocksystem) ergibt ein statisch stabiles Gesamtsystem.

Der oder die Antriebseinheiten mit Propeller können abnehmbar am Trägerrahmen (Rahmenkonstruktion) angebracht sein, was für den Transport vorteilhaft ist. Das Träger-Modul (Rahmenkonstruktion) kann aus einem CFK-Rahmen bestehen.

Rotorblatt-Zustandserfassung kann mittels aktiver Thermografie erfolgen. Eine bei einem, mehreren oder allen Ausführungsbeispielen vorgesehene modulare Bauweise des Roboters, HBS "Hovering Blade Spanner" -Systems, ergibt erweiterte Anwendungsmöglichkeiten.

Der Roboter kann gleichzeitig bei Veränderung des Grundrahmens für den Einsatz von Onshore & Offshore eingesetzt werden.

Die Rotorblatt-Zustandserfassung kann mittels aktiver Thermografie und/oder nach dem Prinzip der optischen angeregten Lockin-Thermografie durchgeführt werden.

Das Verfahren der optischen Lockin-Thermografie (LIT) basiert auf der Wärmeflussanalyse, so dass auch von Wärmeflussthermografie gesprochen werden kann. Die Oberfläche des untersuchten Objekts kann dabei mit am Roboter angebrachten Halogenlampen erwärmt werden. Der dadurch erzeugte Wärmefluss ins Material wird von thermischen Hindernissen wie Impacts, Delaminationen oder Materialdickenschwankungen des Objekts verändert. An der Oberfläche bilden sich durch Wärmerückstau "hot spots" heraus, die mit einer Infrarotkamera bildgebend erfasst werden.

Die Empfindlichkeit des Verfahrens ist durch Verwendung der Lockin-Technik sehr hoch. Dabei kann die Intensität der Halogenlampen sinusförmig moduliert und gleichzeitig die Oberflächentemperatur aufgezeichnet werden. Aus der gemessenen Bildsequenz wird mittels einer Fouriertransformation ein Phasen- und Amplitudenbild errechnet. Im Phasenbild sind Störeffekte, die von unterschiedlichen Emissionskoeffizienten oder inhomogener Anregung herrühren, deutlich reduziert. Die Aussage über den Grenzflächenzustand und/oder der Materialdicke oder der Beschichtungsdicke ist nun möglich.

Bei einem, mehreren oder allen Ausführungsbeispielen kann die optisch angeregte Lockin-Thermographie eingesetzt werden.

Die optisch angeregte Lockin-Thermografie ist eine berührungslose, zerstörungsfreie Prüfmethode, die sehr gut für die Charakterisierung faserverstärkter Kunststoffe (CFK) geeignet ist. Das Verfahren erlaubt kurze Messzeiten. Große Bereiche mit komplexer Geometrie lassen sich mit einer Messung untersuchen. Die Lockin-Technik ist sehr robust und funktioniert auch unter schwierigen Umgebungsbedingungen. Das Verfahren erlaubt z.B. die Prüfung von CFK/ andere Faserverbundwerkstoffe (Delaminationen, Impacts, Einschlüsse und Porosität, Anbindung von Inserts, Harz/Fasergehalt, Preform-Analyse, Faserrichtungsbestimmung...), Korrosionsprüfung, Wanddickenmessungen, Prüfung von Klebeverbindungen, Prüfung von Kunststoffschweißverbindungen bei der Rotorblattprüfung von Windkraftanlagen.

Bei einem, mehreren oder allen Ausführungsbeispielen enthält der Roboter, z.B. das Träger-Modul mit aerodynamischer Antriebstechnik oder alternativ die Bodenstation, oder eine Zentrale, auch die Software für das Inspektionssystem und / oder die Software für das Zustandserfassungssystem.

Mit dem erfindungsgemäßen Roboter, auch als HBS-System bezeichnet, kann die angewandte "Kuck- und Klopftechnologie" ersetzt und diese automatisieren werden, um die Auflagen der wiederkehrenden WEA-Blattuntersuchungen zu erfüllen.

Die wiederkehrenden WEA-Blattuntersuchungen können nun automatisiert ohne ausgebildete Facharbeiter durchgeführt werden. Nach Abschluss der Blatt-Begutachtung vor Ort kann ein Protokoll erstellt und an die ausführende Firma übermittelt werden, wobei ein entsprechendes Untersuchungsprotokoll erstellt werden kann, welches dann dem Auftraggeber zugestellt wird. Diese Verfahrensweise genügt dem Industriestandard, um die Auflagen der alljährlichen wiederkehrenden Blattuntersuchungen Genüge zu tragen.

Bei einem, mehreren oder allen Ausführungsbeispielen kann die aktive Thermografie (Lockin Thermografie, 1.-2.) eingesetzt werden, um die Technik zu rationalisieren.

Für die Blattuntersuchung kann vorzugweise das nachfolgend unter 1. genannte System durch das in 2. genannte System erweitert werden, sowie die unter 3. & 4. genannten Alternativen der zerstörungsfreien Prüfung mit aktiver Thermografie eingesetzt werden:
1. die optisch angeregte Lockin-Thermografie: Einsatz von IR-Kameras, angeregt durch Halogenstrahler (optische Wellen), erweiterbar mit der nachfolgenden Alternative 2.
2. die Ultraschall-Thermografie: Einsatz von IR-Kameras, angeregt durch Ultraschall (thermische Antwort) "erweiterbar mit System 1."
3. die Impuls-Thermografie: Einsatz von IR-Kameras, angeregt durch Bogen- und Blitz-Lampen (thermische Antwort) "erweiterbar mit System 1."
4. die Shearografie: Einsatz von CCD-Kameras (Charge Coupled Device), angeregt durch Laser (Wärme - Vakuum - Vibration).

Das Prinzip der bei einem, mehreren oder allen Ausführungsbeispielen eingesetzten oder einsetzbaren optischen angeregten Lockin-Thermografie, d.h. das Verfahren der optischen Lockin-Thermografie (LIT), basiert auf der Wärmeflussanalyse. Oft spricht man auch von der Wärmeflussthermografie. Die Oberfläche des untersuchten Objekts wird dabei mit Halogenlampen erwärmt. Der dadurch erzeugte Wärmefluss ins Material wird von thermischen Hindernissen wie Impacts, Delaminationen oder Materialdickenschwankungen des Objekts verändert.

An der Oberfläche bilden sich durch Wärmerückstau "hot spots" heraus, die mit einer Infrarotkamera bildgebend erfasst werden. Die Empfindlichkeit des Verfahrens ist durch Verwendung der Lockin- Technik sehr hoch. Dabei wird die Intensität der Halogenlampen sinusförmig moduliert und gleichzeitig die Oberflächentemperatur aufgezeichnet. Aus der gemessenen Bildsequenz wird mittels einer Fouriertransformation ein Phasen- und Amplitudenbild errechnet. Im Phasenbild sind Störeffekte, die von unterschiedlichen Emissionskoeffizienten oder inhomogener Anregung herrühren, deutlich reduziert. Die Aussage über den Grenzflächenzustand und/oder der Materialdicke oder der Beschichtungsdicke ist nun möglich.

Die bei einem, mehreren oder allen Ausführungsbeispielen eingesetzte optisch angeregte Lockin-Thermografie ist eine berührungslose, zerstörungsfreie Prüfmethode, die sehr gut für die Charakterisierung faserverstärkter Kunststoffe (CFK) geeignet ist. Das Verfahren wird besonders dann eingesetzt, wenn kurze Messzeiten benötigt werden. Große Bereiche mit komplexer Geometrie lassen sich mit einer Messung
untersuchen. Die Lockin- Technik ist sehr robust und funktioniert auch unter schwierigen Umgebungsbedingungen. Das Verfahren wird sowohl in der Produktion als auch in der Instandhaltung eingesetzt. OTvis ist mit allen anderen Edevis-Anregungsquellen und Softwaremodulen erweiterbar.
Damit ist eine gute Rotorblattprüfung von Windkraftanlagen möglich.

Bei einem, mehreren oder allen Ausführungsbeispielen kann die Ultraschall-Thermografie eingesetzt werden. Bei der Ultraschall Thermografie wird das untersuchte Objekt mit Hochleistungsultraschall beaufschlagt. Materialstörungen wie Risse oder andere mechanische Grenzflächen erzeugen Reibungsverluste im Material. An der Oberfläche bilden sich dadurch "hot spots" heraus, die mit einer Infrarotkamera detektiert werden. Die Empfindlichkeit des Verfahrens lässt sich mit der Phasen-Technik deutlich steigern. Dabei wird der Intensitätsverlauf der Oberflächentemperatur mittels der Fouriertransformation spektral analysiert und in ein Phasen- und Amplitudenbild zerlegt. Im Phasenbild sind Störeffekte, die von unterschiedlichen Emissionskoeffizienten oder inhomogener Anregung herrühren, deutlich reduziert. Die ultraschall-angeregte Thermografie ist eine zerstörungsfreie Prüfmethode, die sehr gut für die Charakterisierung von Rotorblättern, z.B. nichtmetallischen und metallischen Strukturen geeignet ist. Das Verfahren wird besonders dann eingesetzt, wenn Fehlstellen erkannt werden sollen, die sich durch Schalleinleitung aktivieren lassen. Dazu zählen insbesondere Risse und Anbindungsfehler.

Das bei einem, mehreren oder allen Ausführungsbeispielen eingesetzte Prinzip der Impuls-Thermografie beruht darauf, dass die Oberfläche des untersuchten Objekts mit Blitzlampen kurzzeitig stark erwärmt wird. Bei der Impulsthermografie spielt der durch die Blitzanregung verursachte Wärmefluss eine wesentliche Rolle. Thermische Hindernisse (z.B. Dickenvariationen oder Materialfehler) verändern den Wärmefluss. An der Oberfläche bilden sich Temperaturunterschiede, die mit einer Hochgeschwindigkeits-Infrarotkamera erfasst werden. Die Empfindlichkeit des Verfahrens lässt sich mit der Puls-Phasen-Technologie weiter steigern. Dabei wird der Intensitätsverlauf der Oberflächentemperatur mittels der Fouriertransformation spektral analysiert und in ein Phasen- und Amplitudenbild zerlegt. Das Phasenbild erlaubt mit Hilfe von Kalibrierungen quantitative Aussagen über bestimmte Materialeigenschaften.

Die Pulsthermografie ist eine berührungslose Prüfmethode, die sich hervorragend für die berührungslose Charakterisierung dünner Schichten oder Beschichtungen / Lacken und Ablösungen eignet. Die sehr kurze Prüfdauer und die hohe Nachweisempfindlichkeit macht die Impulsthermografie zu einem extrem leistungsfähigen Werkzeug in der zerstörungsfreien Rotorblattprüfung. Die Puls-Phasen-Auswertetechnik erlaubt dabei die quantitative Bestimmung von Materialeigenschaften wie Dicke, Porosität, oder Temperaturleitfähigkeit. Darüber hinaus werden somit Störungen wie variierende Oberflächeneigenschaften oder ungleichmäßige Erwärmung unterdrückt. Die die Interpretation und Dokumentation von Prüfergebnissen ist dabei sehr einfach. Das auf Hochleistung-Blitzlampen basierende PTvis-System ist modular aufgebaut und lässt sich mit weiteren Anregungsarten (UTvis, ITvis, OTvis...) erweitern.

Bogen- und Blitzlampen werden für viele verschiedene Zwecke eingesetzt. Zur präzisen Messung von Entfernungen, für die Laseranregung in der Industrie, aber auch für Anwendungen in der kosmetischen Medizin und bei der Sonnensimulation.

Bei einem, mehreren oder allen Ausführungsbeispielen kann auch das Prinzip der Shearografie eingesetzt werden. Die Shearografie ist ein interferometrisches zerstörungsfreies Prüfverfahren. Dabei wird die Phasendifferenz zwischen zwei Lichtwellen ermittelt, die einen Gangunterschied aufweisen. Alle Objekteigenschaften, die den Lichtweg verändern (also insbesondere Verformungen der Oberfläche) lassen sich mit einem Auflösungsvermögen besser als die verwendete Wellenlänge präzise erfassen und bildgebend darstellen. Die Shearografie ist eine berührungslose, zerstörungsfreie Prüfmethode, die sehr gut für die Charakterisierung von Verbundmaterialen wie faserverstärkter Kunststoffe (CFK) geeignet ist. Das Verfahren erlaubt die Prüfung von komplexen Materialaufbauten, z.B. Waben-Sandwich-Bauteile oder geschäumte Bauteile. Große Bereiche lassen sich mit einer Messung untersuchen.

Bei einem, mehreren oder allen Ausführungsbeispielen kann elektromagnetische Strahlung, z.B. Licht, oder Infrarotstrahlung eingesetzt werden.
Die Infrarotoptiken kann z.B. aus Germanium hergestellt sein. Eine solche Infrarotkamera ermöglicht es - mit gewissen Einschränkungen - durch Atmosphäre hindurchzusehen. Bei Entfernungen zwischen Infrarotkamera und Messobjekt, in diesem Fall GFK, CFK & Holz, von einigen Metern hat die Atmosphäre bei Normalbedingungen praktisch keinen Einfluss auf die Messung. Erst bei Messungen über größere Entfernung wird es problematisch, da die Messwerte rechnerisch für eine detaillierte Schadensanalyse von Verbundwerkstoffen von WEA-Blättern nicht korrigiert werden können. Durch die Robotergeführte Nahfeldmessung direkt am Rotorblatt stellen sich diese Probleme bei der Erfindung nicht.

Eine direkte und intensive Sonneneinstrahlung auf das Messobjekt, auch bei geringer Entfernung, kann Einfluss auf die Messung verursachen. In diesem Fall wird das WEA-Blatt in Serviceposition gestellt und in den Schatten des WEA-Turms positioniert.

In den Figuren 13, 14 ist ein Ausführungsbeispiel des Führungs- und Andocksystems 5 in größeren Einzelheiten gezeigt. Der Roboter kann vorzugsweise zwei an zwei sich gegenüberliegenden Rahmenabschnitten, z.B. den beiden kürzeren Rahmen, angeordnete derartige Systeme 5 aufweisen. Bei anderen Ausführungsbeispielen können aber auch nur ein, oder drei oder mehr derartige Systeme 5 vorgesehen sein. Das oder jedes Führungs- und Andocksystem 5 weist die federvorgespannten und / oder motorisch verschwenkbaren Arme 11 auf, die sich direkt an das nicht dargestellte Rotorblatt 8 mechanisch anlegen können und die in einem auf der Laufschiene 16 beweglich anbringbaren oder angebrachten Kopfstück 15 schwenkbar gelagert sind. Die Kopfstücke 15 sind z.B. an jeweils einem der einander gegenüberliegenden Schmalseiten des Rahmens 1 an den jeweiligen Laufschienen 16 angebracht und können in sich Federn oder Elektromotore zur Vorspannung und / oder Bewegung der Arme 11 in Schließrichtung oder Öffnungsrichtung enthalten.

Die Arme 11 sind an ihren äußeren Enden gelenkig mit Rollenträgern 20 verbunden, in denen mindestens eine durch den z.B. seitlich angebrachten Elektromotor 19 antreibbare Rolle drehbar gelagert ist.

Wie aus Fig. 14 ersichtlich ist, trägt jeder Rollenträger 20 mehrere, z.B. fünf drehbare Rollen (dies umfasst auch Walzen oder Scheiben) 14, die parallel nebeneinander mit in Arbeitsstellung im wesentlichen horizontal positionierten Drehachsen angeordnet sind und durch ein Lagerblech 21 drehbar gelagert sind. Die Rollen 14 können glatt, geriffelt, gezahnt oder in anderer Weise gemustert sein, um einen Formschluß mit dem Riemen 13 zu erreichen. Alternativ kann der Riemen auch entfallen, so dass die Rollen 14 direkt mit dem Rotorblatt 8 in Kontakt gelangen und durch den motorischen Antrieb mindestens einer der Rollen 14 am Rotorblatt 8 entlangwandern.

## Patentansprüche

1. Roboter zur Inspektion von Rotorblättern von Windenergieanlagen, mit einer Rahmenkonstruktion (1) mit einer ein Rotorblatt (8) im Einsatz umgebenden inneren Öffnung und mehreren an der Rahmenkonstruktion angeordneten Propellern (3) für eine vertikale Flugbewegung der Roboters, und einem an der Rahmenkonstruktion (1) angebrachten Rotorblatt-Zustandserfassungssystem (6) zur vorzugsweise berührungsfreien Untersuchung der Rotorblätter (8),
wobei vorzugsweise ein Kabel (7), z.B. ein Strom- und / oder Datenkabel, zur Verbindung des Roboters mit einer beispielsweise am Boden oder auf einem Fahrzeug befindlichen Station (10), z.B. einer Steuer- und Auswertestation, vorgesehen ist.

2. Roboter nach Anspruch 1, mit einer Andock- und/oder Führungseinrichtung (5) zum Andocken und / oder Führen des Roboters an dem Rotorblatt (8).

3. Roboter nach Anspruch 2, bei dem die Andock- und/oder Führungseinrichtung (5) einen oder mehrere verstellbare Arme (11) aufweist.

4. Roboter nach Anspruch 3, bei dem die Arme (11) der Andock- und/oder Führungseinrichtung (5) federvorgespannt und / oder motorisch verstellbar sind.

5. Roboter nach Anspruch 3 oder 4, bei dem die Arme (11) der Andock- und/oder Führungseinrichtung (5) mit einer Beschichtung (12) wie etwa Puffern oder Gummipuffern versehen sind.

6. Roboter nach einem der Ansprüche 2 bis 5, bei dem die Andock- und/oder Führungseinrichtung (5) an den Schmalseiten der Rahmenkonstruktion angebracht ist.

7. Roboter nach einem der vorhergehenden Ansprüche 2 bis 6, bei dem die Andock- und/oder Führungseinrichtung (5) oder Arme (11) derselben motorisch antreibbar ist, um sich entlang des zu untersuchenden Rotorblatts (8) nach oben oder unten zu bewegen.

8. Roboter nach Anspruch 7, bei dem die Andock- und/oder Führungseinrichtung (5) oder Arme (11) mindestens einen Rollenträger (20) mit einem Motor (19) und mindestens einer durch diesen antreibbaren Rolle (14) aufweist, die einen mit dem Rotorblatt in Verbindung stehenden umlaufenden Riemen antreibt oder direkt mit dem zu untersuchenden Rotorblatt (8) in Berührung steht, um den Roboter, optional unter Zusammenwirkung mit den Propellern, entlang des zu untersuchenden Rotorblatts (8) nach oben oder unten zu bewegen.

9. Roboter nach einem der vorhergehenden Ansprüche, mit einer Steuerung (9, 9') mit einem Wechselrichter (9) oder Umrichter, die bzw. der an der Rahmenkonstruktion angebracht ist und zur Umwandlung von über das Kabel (7) zugeführter Versorgungsspannung dient.

10. Roboter nach einem der vorhergehenden Ansprüche, mit zwei oder mehr, vorzugsweise vier Gruppen aus jeweils einem oder mehreren, vorzugsweise vier Propellern (3), die an den beiden Längsseiten der Rahmenkonstruktion angebracht sind.

11. Roboter nach einem der vorhergehenden Ansprüche, bei dem an jeder der beiden Längsseiten der Rahmenkonstruktion jeweils mindestens ein Propeller oder eine Gruppe von Propellern, vorzugsweise die mittlere Gruppe, in seitlich abstehender Weise angeordnet ist, derart, dass sie größeren Abstand zu einer durch den Rotor parallel zu den Längsseiten verlaufenden Vertikalebene aufweist als die seitlich zu dieser Gruppe benachbarte/n Gruppe/n, die an der jeweiligen Längsseite der Rahmenkonstruktion angebracht ist bzw. sind.

12. Roboter nach einem der vorhergehenden Ansprüche, bei dem das Zustandserfassungssystem (6) mindestens eine Kamera und / oder eine Ultraschalluntersuchungseinrichtung aufweist.

13. System mit einem Roboter nach einem der vorhergehenden Ansprüche, einer fest oder vorzugsweise mobil installierten Station (10), z.B. einer Steuer- und Auswertestation, und einem Kabel (7) zur Verbindung des Roboters mit der Station.

## Claims

1. Robot for inspecting rotor blades of wind turbines, comprising a frame construction (1) having an inner opening which surrounds a rotor blade (8) during use and a plurality of propellers (3) arranged on the frame construction for a vertical flying movement of the robot, and comprising a rotor blade state detection system (6) mounted on the frame construction (1) for preferably contactless inspection of the rotor blades (8), wherein preferably a cable (7), e.g. a power and/or data cable, is provided for connecting the robot to a station (10), e.g. a control and analysis station, located for example on the ground or on a vehicle.

2. Robot according to claim 1, comprising a docking and/or guiding means (5) for docking and/or guiding the robot on the rotor blade (8).

3. Robot according to claim 2, wherein the docking and/or guiding means (5) comprises one or more adjustable arms (11).

4. Robot according to claim 3, wherein the arms (11) of the docking and/or guiding means (5) are spring-preloaded and/or motor-adjustable.

5. Robot according to either claim 3 or claim 4, wherein the arms (11) of the docking and/or guiding means (5) are provided with a coating (12), such as buffers or rubber buffers.

6. Robot according to any one of claims 2 to 5, wherein the docking and/or guiding means (5) is mounted on the narrow sides of the frame construction.

7. Robot according to any one of the preceding claims 2 to 6, wherein the docking and/or guiding means (5) or the arms (11) thereof can be motor-driven in order to move upwards or downwards along the rotor blade (8) to be inspected.

8. Robot according to claim 7, wherein the docking and/or guiding means (5) or the arms (11) comprise(s) at least one pulley carrier (20) which has a motor (19) and at least one pulley (14) which can be driven by said motor, which pulley drives a circulating belt connected to the rotor blade or is in direct contact with the rotor blade (8) to be inspected in order to move the robot, optionally by interacting with the propellers, upwards or downwards along the rotor blade (8) to be inspected.

9. Robot according to any one of the preceding claims, comprising a controller (9, 9') having an inverter (9) or converter which is mounted on the frame construction and is used to convert the supply voltage fed via the cable (7).

10. Robot according to any one of the preceding claims, comprising two or more, preferably four, groups of one or more, preferably four, propellers (3) which are mounted on the two longitudinal sides of the frame construction.

11. Robot according to any one of the preceding claims, wherein, on each of the two longitudinal sides of the frame construction, at least one propeller, or a group of propellers, preferably the central group, is arranged in a laterally projecting manner such that said propeller or group of propellers is at a greater distance from a vertical plane extending through the rotor in parallel with the longitudinal sides than the group(s) laterally adjacent to said group, which group(s) is/are mounted on the relevant longitudinal side of the frame construction.

12. Robot according to any one of the preceding claims, wherein the state detection system (6) comprises at least one camera and/or an ultrasonic inspection device.

13. System comprising a robot according to any one of the preceding claims, a fixedly or preferably movably installed station (10), e.g. a control and analysis station, and a cable (7) for connecting the robot to the station.

## Revendications

1. Robot pour l'inspection de pales de rotor d'éoliennes, avec une construction de cadre (1) avec une ouverture intérieure entourant une pale de rotor (8) en utilisation et plusieurs propulseurs (3) agencés sur la construction de cadre pour un mouvement de vol vertical du robot, et un système de détection d'état de pale de rotor (6) monté sur la construction de cadre (1) pour l'examen de préférence sans contact des pales de rotor (8), dans lequel de préférence un câble (7), par exemple un câble de courant et/ou de données est prévu pour la liaison du robot avec un poste (10) se trouvant par exemple sur le sol ou sur un véhicule, par exemple un poste de commande et d'évaluation.

2. Robot selon la revendication 1, avec un dispositif d'amarrage et/ou de guidage (5) pour l'amarrage et/ou le guidage du robot sur la pale de rotor (8).

3. Robot selon la revendication 2, pour lequel le dispositif d'amarrage et/ou de guidage (5) présente un ou plusieurs bras réglables (11).

4. Robot selon la revendication 3, pour lequel les bras (11) du dispositif d'amarrage et/ou de guidage (5) sont précontraints par ressort et/ou réglables par voie motorisée.

5. Robot selon la revendication 3 ou 4, pour lequel les bras (11) du dispositif d'amarrage et/ou de guidage (5) sont pourvus d'un revêtement (12) tels que des tampons ou des tampons en caoutchouc.

6. Robot selon l'une des revendications 2 à 5, pour lequel le dispositif d'amarrage et/ou de guidage (5) est monté sur les petits côtés de la construction de cadre.

7. Robot selon l'une des revendications 2 à 6 précédentes, pour lequel le dispositif d'amarrage et/ou de guidage (5) ou les bras (11) de celui-ci sont entraînables par voie motorisée afin de se déplacer le long de la pale de rotor (8) à examiner vers le haut et le bas.

8. Robot selon la revendication 7, pour lequel le dispositif d'amarrage et/ou de guidage (5) ou les bras (11) présentent au moins un support de rouleaux (20) avec un moteur (19) et au moins un rouleau (14) entraînable par celui-ci, qui entraîne une courroie tournante se trouvent en liaison avec la pale de rotor ou est en contact directement avec la pale de rotor (8) à examiner afin de déplacer le robot, en option par coopération avec les propulseurs, le long de la pale de rotor (8) à examiner vers le haut ou le bas.

9. Robot selon l'une des revendications précédentes, avec une commande (9, 9') avec un onduleur (9) ou convertisseur qui est monté sur la construction de cadre et sert à la conversion de tension d'alimentation fournie par le biais du câble (7).

10. Robot selon l'une des revendications précédentes, avec deux ou plus, de préférence quatre groupes de respectivement un ou plusieurs, de préférence quatre propulseurs (3) qui sont montés sur les deux grands côtés de la construction de cadre.

11. Robot selon l'une des revendications précédentes, pour lequel sur chacun des deux grands côtés de la construction de cadre respectivement au moins un propulseur ou un groupe de propulseurs, de préférence le groupe médian est agencé de manière à dépasser latéralement de sorte qu'il présente une plus grande distance d'un plan vertical s'étendant au travers du rotor parallèlement aux grands côtés que le/les groupe(s) contigu(s) latéralement à ce groupe qui est ou sont monté(s) sur le grand côté respectif de la construction de cadre.

12. Robot selon l'une des revendications précédentes, pour lequel le système de détection d'état (6) présente au moins une caméra et/ou un dispositif d'examen par ultrasons.

13. Système avec un robot selon l'une des revendications précédentes, un poste (10) installé fixement ou de préférence de manière mobile, par exemple un poste de commande et d'évaluation, et un câble (7) pour la liaison du robot avec le poste.
